# EUROPÄISCHE PATENTSCHRIFT

(11) **EP 2 025 218 B1**
(45) Veröffentlichungstag und Bekanntmachung des Hinweises auf die Patenterteilung: **13.07.2011**
(21) Anmeldenummer: 08012803.6
(22) Anmeldetag: 16.07.2008
(51) Int. Cl.: A01D 82/02

(54) **Konditioniereinrichtung für einen Feldhäcksler**
Conditioning device for a chaff cutter
Dispositif de conditionnement pour une ramasseuse-hacheuse

(30) Priorität: 11.08.2007 DE 102007038092
(43) Veröffentlichungstag der Anmeldung: 18.02.2009
(73) Patentinhaber: CLAAS Selbstfahrende Erntemaschinen GmbH, 33426 Harsewinkel (DE)
(72) Erfinder: Haffert, Andreas, Dr., 33334 Gütersloh (DE)
(74) Vertreter: Heuer, Wilhelm

(56) Entgegenhaltungen:
- DE-A1- 19 532 290
- DE-B- 1 111 445
- FR-A- 1 412 195
- FR-A- 1 578 285

## Beschreibung

Die vorliegende Erfindung betrifft eine Konditioniereinrichtung für einen Feldhäcksler, die zum Anschlagen von in Erntegut, insbesondere von Mais, enthaltenen Körnern dient. Wenn das gehäckselte, silierte Erntegut an Tiere verfüttert wird, ist durch das Anschlagen die Verwertbarkeit der in den Körnern enthaltenen Nährstoffe verbessert.

Um einen hohen Aufschlussgrad des Ernteguts zu erreichen, wurde bereits in DE 195 32 290 A1 vorgeschlagen, eine Konditioniereinrichtung mit drei Walzen zu schaffen, die zwei von dem Erntegut nacheinander durchlaufene Konditionierspalte bilden.

Die Tendenz zu immer größeren Maschinenbreiten führt dazu, dass die Konditioniereinrichtungen für Feldhäcksler für immer größere Erntegutdurchsätze ausgelegt werden müssen. Durch die Verwendung eines auseinanderklappbaren Maisgebisses kann die Breite eines Feldhäcklers im Feldeinsatz dessen Breite bei der Fahrt auf einem öffentlichen Verkehrsweg um ein Vielfaches überschreiten. Proportional zur Breite des Maisgebisses nimmt die Menge des Erntegutes, das pro Zeiteinheit geschnitten und aufgenommen werden kann, zu. Die Breite der Konditioniereinrichtung kann nicht in gleichem Maße gesteigert werden, da sie durch die Karosseriebreite des Feldhäckslers begrenzt ist und ein zu breiter Feldhäcksler nicht mehr am öffentlichen Straßenverkehr teilnehmen dürfte. Es ist daher erforderlich, den Durchsatz der Konditioniereinrichtung bei gleich bleibender Breite zu steigern. In der Praxis hat sich gezeigt, dass dies mit den gegenwärtigen Konzepten zu einer erheblichen Beanspruchung der Konditionierwalzen, insbesondere ihrer Lager, führt. Kurze Standzeiten der Walzen bzw. der Lager sind die Folge.

Aufgabe der vorliegenden Erfindung ist daher, eine Konditioniereinrichtung für einen Feldhäcksler zu schaffen, die einen hohen Erntegutdurchsatz bei reduzierter Lagerbeanspruchung ermöglicht.

Die Aufgabe wird gelöst durch eine Konditioniereinrichtung für einen Feldhäcksler mit einer Mehrzahl von jeweils durch ein Paar von Walzen begrenzten, in einem Förderweg für Erntegut nacheinander angeordneten Konditionierspalten, bei der wenigstens eine erste Walze wenigstens eines Paars in axialer Richtung in Abschnitte mit hoher bzw. niedriger Effektivität gegliedert ist. Eine Verringerung der Belastung von Walzen und Lagern ergibt sich nicht nur daraus, dass ein Teil des Ernteguts, das den Abschnitt niedriger Konditioniereffektivität durchläuft, nur schwach aufgeschlossen wird, sondern auch daraus, dass Erntegut, das in einem Eingangszwickel eines hocheffektiven Abschnitts komprimiert, geknetet und dabei aufgeschlossen wird, zur Seite in einen Abschnitt geringerer Konditioniereffektivität entweicht. So reduziert sich der Anteil der Antriebsenergie, der zum Komprimieren des Ernteguts vor dem Durchgang durch den Konditionierspalt aufgewandt wird und wesentlich zur Belastung der Walzen und Lager beiträgt.

Um Erntegut, das einen Abschnitt niedriger Konditioniereffektivität eines ersten Walzenpaars passiert hat, gründlich aufzuschließen, können die Walzen eines nachfolgenden Konditionierspalts ungegliedert sein, mit hoher Konditioniereffektivität über ihre gesamte axiale Ausdehnung hinweg. Auch hier ist es jedoch vorteilhafterweise möglich, Antriebsenergie einzusparen und Walzen und Lager zu entlasten, indem wenigstens eine erste Walze auch dieses zweiten Paars axial in Abschnitte hoher bzw. niedriger Konditioniereffektivität gegliedert ist und Abschnitte jeweils gleicher Konditioniereffektivität des ersten und des zweiten Paars gegeneinander axial versetzt sind.

Die zweite Walze jedes Paars kann axial ungegliedert sein.

Um das Erntegut beim Durchlaufen der Konditionierspalte zu zerfasern, sind die Walzen jedes Paars vorzugsweise in entgegengesetzten Richungen drehangetrieben. Dabei sind die Drehrichtungen zweckmäßigerweise so festgelegt, dass die erste Walze wenigstens eines der Paare den von dem Paar begrenzten Konditionierspalt entgegen der Förderrichtung des Ernteguts durchläuft und die zweite Walze denselben Konditionierspalt in der Förderrichtung des Ernteguts durchläuft. Durch das Vorhandensein der Abschnitte geringer Konditioniereffektivität ist die Neigung der ersten Walze, Erntegut entgegen der Förderrichtung mitzunehmen, geringer als die Neigung der zweiten Walze, es durch den Konditionierspalt hindurchzutreiben. So kann das Erntegut den Spalt mit hohem Durchsatz passieren.

Ein besonders kompakter Aufbau ist realisierbar, wenn die zweite Walze mehreren Paaren von Walzen angehört.

Um eine gleichmäßige Verteilung der Lagerkräfte auf rechte und linke Lager der Walzen zu erzielen, sollte die Zahl der Abschnitte an jeder ersten Walze wenigstens drei betragen; vorzugsweise ist sie erheblich größer, z.B. größer als 10, um die Breite der einzelnen Abschnitte nicht zu groß werden zu lassen. Die Breite der einzelnen Abschnitte beträgt vorzugsweise nicht mehr als 20 cm.

Meist werden die Abschnitte hoher Effektivität einen größeren Durchmesser aufweisen als die Abschnitte niedriger Effektivität. Dann ist ein sehr kompakter Aufbau realisierbar, indem zwei erste Walzen gemeinsam einen Spalt bilden, in welchem ein Abschnitt hoher Effektivität einer der ersten Walzen zwischen zwei Abschnitte hoher Effektivität der anderen ersten Walze eingreift.

In diesem Fall kann die Breite der Abschnitte hoher Effektivität nicht mehr als die Hälfte der Gesamtbreite der Walzen ausmachen.

Um auch Erntegut vollständig aufzuschließen, das beim Passieren eines ersten Konditionierspalts seitwärts ausgewichen ist und einen Abschnitt geringer Effektivität passiert hat, können die Abschnitte hoher Effektivität zweier Konditionierspalte wenigstens teilweise überlappen. In diesem Fall sind vorzugsweise die Abschnitte hoher Effektivität an wenigstens einer der ersten Walzen breiter als die Abschnitte niedriger Effektivität.

Wenn unterschiedliche erste Walzen an zwei auf dem Weg des Ernteguts aufeinander folgenden Konditionierspalten verwendet werden, so kann zweckmäßigerweise die Breite der Abschnitte hoher Effizienz am zuletzt durchlaufenen Konditionierspalt größer als am zuerst durchlaufenen sein, da ersterer bereits vorkonditioniertes Erntegut empfängt und somit an sich geringer beansprucht ist.

Unter Kostengesichtspunkten ist es vorteilhaft, baugleiche erste Walzen am ersten und am zweiten Konditionierspalt zu verwenden. Zweckmäßigerweise sind in einem solchen Fall die ersten Walzen spiegelbildlich zueinander angeordnet, so dass jeweils ein Abschnitt hoher Effektivität einer der ersten Walzen mit einem Abschnitt niedriger Effektivität der anderen ersten Walze überlappt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: den vorderen Bereich eines Feldhäckslers mit einer Konditioniereinrichtung gemäß einer ersten Ausgestaltung der vorliegenden Erfindung in einem schematischen Aufriss;
- Fig. 2: eine schematische, perspektivische Ansicht der Walzen der Konditioniereinrichtung;
- Fig. 3: eine vergrößerte Detailansicht der Walzen;
- Fig. 4: einen schematischen Aufriss einer Konditioniereinrichtung gemäß einer zweiten Ausgestaltung der Erfindung; und
- Fig. 5: eine perspektivische Ansicht der Walzen der Konditioniereinrichtung aus Figur 4.

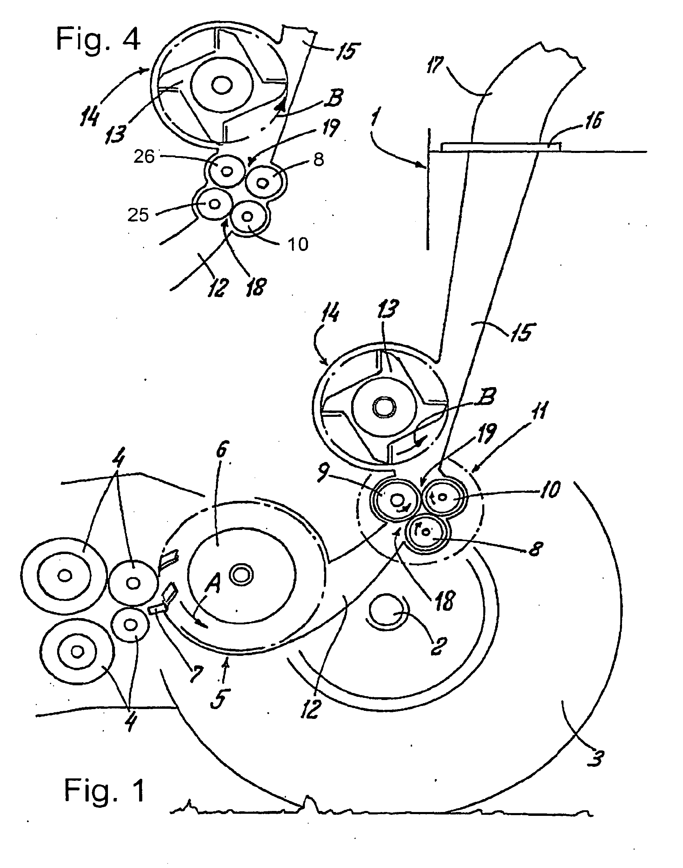

Der in Figur 1 partiell dargestellte selbst fahrende Feldhäcksler 1 hat auf einer Vorderachse 2 gelagerte Laufräder 3. In Vorwärtsfahrtrichtung gesehen sind vor der Achse 2 nicht näher erläuterte Einzugsorgane 4 wie etwa ein Maisgebiss angeordnet. Zwischen den Einzugsorganen 4 und der Achse 2 ist innerhalb einer Karosserie des Feldhäckslers 1 eine Häckseleinrichtung 5 montiert, die im Wesentlichen aus einer mit Messern besetzten, rotierend antreibbaren Häckseltrommel 6 und einem fest stehenden Gegenschneider 7 besteht. Gemäß der Darstellung in Figur 1 wird die Häckseltrommel 6 entgegen dem Uhrzeigersinn in Pfeilrichtung A angetrieben.

Oberhalb der Achse 2 ist eine aus drei Konditionierwalzen 8, 9, 10 bestehende Konditioniereinrichtung 11 eingerichtet. Zwischen der Konditioniereinrichtung 11 und der Häckseleinrichtung 5 erstreckt sich ein Leitkanal 12. Oberhalb der Konditioniereinrichtung 11 liegt ein mit einem drehantreibbaren Rotor 13 ausgerüsteter Nachbeschleuniger 14. Der Rotor 13 wird in der Darstellung entgegen dem Uhrzeigersinn in Pfeilrichtung B angetrieben. Mittels des Nachbeschleunigers 14 wird das Häckselgut in einen Auswurfschacht 15 geschleudert, an dessen dem Nachbeschleuniger 14 abgewandt liegendem Ende ein Drehkranz 16 angesetzt ist, um einen andeutungsweise dargestellten Auswurfkrümmer 17 aufzunehmen.

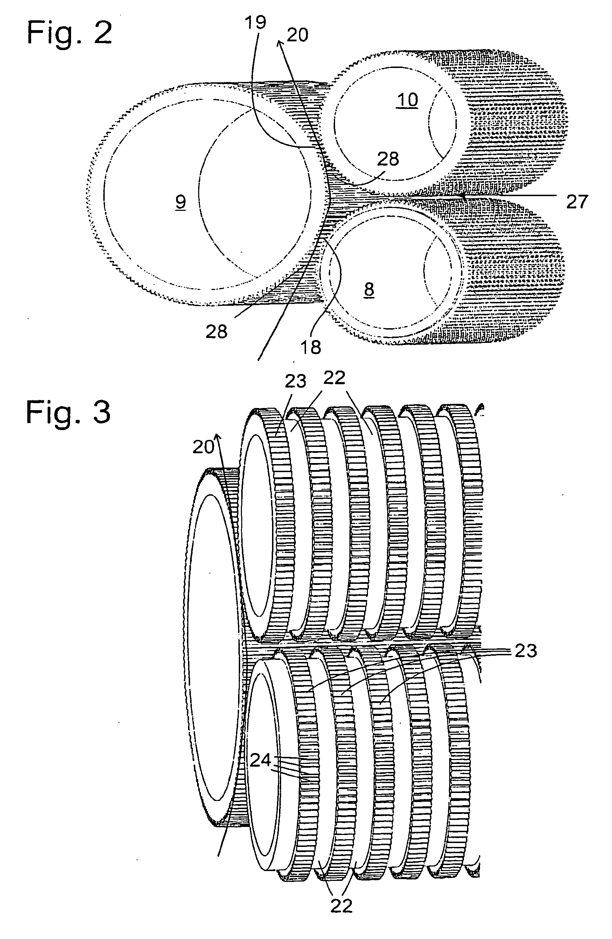

Figur 2 zeigt eine perspektivische Ansicht der Konditionierwalzen 8, 9, 10. Die Konditionierwalzen 8, 9, 10 sind in nicht näher erläuterter Weise in Richtung der eingezeichneten Pfeile drehangetrieben. Die Walze 9 bildet mit der Walze 8 einen ersten, stromaufwärtigen Konditionierspalt 18 und mit der Walze 10 einen zweiten, stromabwärtigen Konditionierspalt 19. Der Weg des Häckselguts durch die Spalte 18, 19 ist durch einen Pfeil 20 bezeichnet. Indem die zwei einen gleichen Konditionierspalt 18 oder 19 begrenzenden Walzen 8, 9 bzw. 10, 9 gegenläufig rotieren, wird Erntegut in einem Eingangszwickel 28 jedes Konditionierspalts zerfasert.

Die Konditionierwalze 9 trägt an ihrer Oberfläche Zähne 21, die sich rippenartig über die gesamte axiale Ausdehnung der Walze 9 erstrecken. Im Gegensatz dazu sind die Walzen 8, 10 in eine Vielzahl von alternierenden Abschnitten 22, 23 unterteilt, die sich, wie in Figur 3 zu erkennen, in ihrer Oberflächenstruktur und in ihrem Durchmesser unterscheiden. Die Walze 8 schließt auf ihrer linken Seite mit einem Abschnitt 22 ab, der keine Zähne trägt. An diesen schließt ein Zähne 24 tragender Abschnitt 23 von geringfügig vergrößertem Durchmesser an und an diesen wiederum ein zahnloser Abschnitt 22. Abschnitte 22, 23 wechseln sich über die gesamte Länge der Walze 8 hin ab, bis zum in Figur 3 nicht gezeigten, entgegen gesetzten Ende, das durch einen Zähne tragenden Abschnitt 23 gebildet ist. Der Abstand der Walzen 8, 9 ist so eingestellt, dass Maiskörner die engste Stelle des Konditionierspalts 18 zwischen der Walze 9 und einem Zähne tragenden Abschnitt 23 der Walze 8 nicht passieren können, ohne angeschlagen zu werden.

Die Walze 10 ist baugleich mit der Walze 8, allerdings ist ihre Einbaulage spiegelbildlich zu der Walze 8, so dass das in Figur 3 gezeigte Ende der Walze 10 ein Zähne tragender Abschnitt 23 ist. So liegen auf dem Weg des Ernteguts durch die Konditioniereinrichtung jeweils ein zahnloser Abschnitt 22 und ein gezahnter Abschnitt 23 hintereinander, so dass alles Erntegut wenigstens in einem der beiden Konditionierspalte 18, 19 einem gezahnten Abschnitt 23 ausgesetzt ist und darin enthaltene Körner angeschlagen werden.

In der Darstellung der Figur 3 sind die Abschnitte 22, 23 jeweils gleich breit, so dass die Walzen 8, 10 so eng benachbart platziert sein können, dass in einem von den zwei Walzen 8, 10 begrenzten Spalt 27 jeweils ein gezahnter Abschnitt 23 der Walze 8 zwischen gezahnte Abschnitte 23 der Walze 10 eingreift und umgekehrt.

Alternativ kommen auch Ausgestaltungen in Betracht, in denen die gezahnten Abschnitte 23 der Walzen 8, 10 jeweils etwas breiter als die zahnlosen Abschnitte 22 sind, um sicherzustellen, dass Erntegut, das beim Durchgang durch den ersten Konditionierspalt 18 in axialer Richtung ausgewichen ist und einen zahnlosen Abschnitt 22 der Walze 8 passiert hat, anschließend zuverlässig von einem gezahnten Abschnitt der Walze 10 erfasst wird.

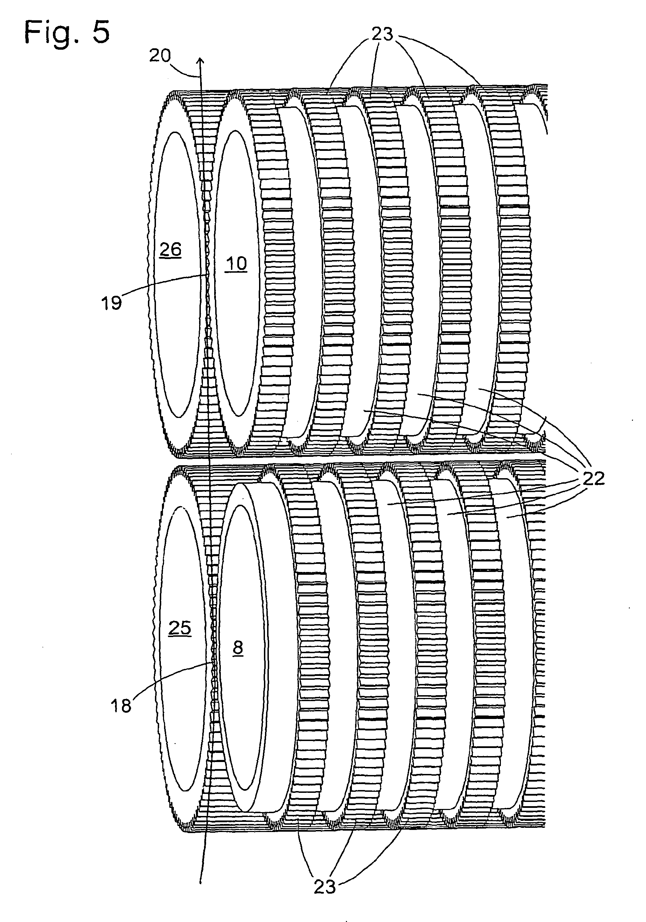

Da bei der Ausgestaltung der Figuren 1 bis 3 die zwei Konditionierwalzen 8, 10 mit derselben Walze 9 zusammenwirken, sind die Lager der Walze 9 durch die an den Konditionierspalten 18, 19 auftretenden Kräfte doppelt belastet. Die in Fig. 4 in einem schematischen Aufriss und in Fig. 5 in einer perspektivischen Teilansicht analog Figur 3 dargestellte zweite Ausgestaltung der Erfindung vermeidet dieses Problem, indem sie die Konditionierwalze 9 durch zwei Walzen 25, 26 ersetzt, die wie die Walze 9 auf ihrer gesamten Länge gezahnt sind, wobei die Walze 25 zusammen mit der Walze 8 den Konditionierspalt 18 und die Walze 26 zusammen mit der Walze 10 den Konditionierspalt 19 begrenzt.

### Bezugszeichen

- 1: Feldhäcksler
- 2: Achse
- 3: Laufrad
- 4: Einzugsorgan
- 5: Häckslereinrichtung
- 6: Häckslertrommel
- 7: Häckslermesser
- 8: Konditioniereinrichtung
- 9: Konditioniereinrichtung
- 10: Konditioniereinrichtung
- 11: Konditioniereinrichtung
- 12: Leitkanal
- 13: Rotor
- 14: Nachbeschleuniger
- 15: Auswurfschacht
- 16: Drehkranz
- 17: Auswurfschacht
- 18: Konditionierspalt
- 19: Konditionierspalt
- 20: Pfeil
- 21: Zähne
- 22: Abschnitt
- 23: Abschnitt
- 24: Zähne
- 25: Walze
- 26: Walze

## Patentansprüche

1. Konditioniereinrichtung für einen Feldhäcksler mit einer Mehrzahl von durch jeweils ein Paar von Walzen (8, 9; 10, 9) begrenzten, in einem Förderweg für Erntegut nacheinander angeordneten Konditionierspalten (18; 19), **dadurch gekennzeichnet, dass** wenigstens eine erste Walze (8; 9) wenigstens eines Paars in axialer Richtung in Abschnitte mit hoher bzw. niedriger Konditioniereffektivität (23; 22) gegliedert ist.

2. Konditioniereinrichtung nach Anspruch 1, **dadurch gekennzeichnet, dass** ferner wenigstens eine erste Walze (10; 8) wenigstens eines zweiten Paars (10,9; 8, 9) in axialer Richtung in Abschnitte (23; 22) mit hoher bzw. niedriger Konditioniereffektivität gegliedert ist, und dass Abschnitte (22; 23) jeweils gleicher Konditioniereffektivität des ersten und des zweiten Paars (8, 9; 10, 9) gegeneinander axial versetzt sind.

3. Konditioniereinrichtung nach Anspruch 1 oder 2, **dadurch gekennzeichnet, dass** die zweite Walze (9) jedes Paars axial ungegliedert ist.

4. Konditioniereinrichtung nach Anspruch 3, **dadurch gekennzeichnet, dass** die erste Walze (8; 10) wenigstens eines der Paare (8, 9; 10, 9) den von dem Paar begrenzten Konditionierspalt (18; 19) entgegen der Förderrichtung des Ernteguts durchläuft und die zweite Walze (10; 25, 26) den Konditionierspalt (18; 19) in der Förderrichtung des Ernteguts durchläuft.

5. Konditioniereinrichtung nach einem der vorhergehenden Ansprüche, **dadurch gekennzeichnet, dass** eine gleiche zweite Walze (9) mehreren Paaren (8, 9; 10, 9) von Walzen angehört.

6. Konditioniereinrichtung nach einem der vorhergehenden Ansprüche, **dadurch gekennzeichnet, dass** die Zahl der Abschnitte (22; 23) an jeder ersten Walze (8; 19) wenigstens drei beträgt.

7. Konditioniereinrichtung nach einem der vorhergehenden Ansprüche, **dadurch gekennzeichnet, dass** die Abschnitte hoher Effektivität (23) einen größeren Durchmesser aufweisen als die Abschnitte niedriger Effektivität (22), und dass zwei erste Walzen (8, 10) gemeinsam einen Spalt (27) bilden, in dem ein Abschnitt hoher Effektivität (23) einer der ersten Walzen zwischen zwei Abschnitte hoher Effektivität (23) der anderen ersten Walze eingreift.

8. Konditioniereinrichtung nach einem der Ansprüche 1 bis 5, **dadurch gekennzeichnet, dass** die Abschnitte hoher Effektivität (23) zweier Konditionierspalten (18; 19) wenigstens teilweise überlappen.

9. Konditioniereinrichtung nach Anspruch 8, **dadurch gekennzeichnet, dass** die Abschnitte hoher Effektivität an wenigstens einer der ersten Walzen breiter sind als die Abschnitte niedriger Effektivität.

10. Konditioniereinrichtung nach einem der vorhergehenden Ansprüche, **dadurch gekennzeichnet, dass** die ersten Walzen (8; 10) zweier Konditionierspalte (18; 19) baugleich und spiegelbildlich zueinander angeordnet sind.

## Claims

1. conditioning arrangement for a forage harvested, having a plurality of conditioning gaps (18, 19) which are each defined by a pair of rollers (8, 9; 10, 9) and which are arranged in succession on a feed path for harvested crop, **characterised in that** at least a first roller (8; 9) of at least one pair is divided in the axial direction into sections (23, 22) of high and low conditioning effectiveness.

2. conditioning arrangement according to claim 1, **characterised in that** at least a first roller (10; 8) of at least one second pair (10, 9; 8, 9) is also divided in the axial direction into sections (23, 22) of high and low conditioning effectiveness, and **in that** sections (22, 23) having the same conditioning effectiveness of the first and second pairs (8, 9; 10, 9) are offset from one another axially.

3. Conditioning arrangement according to claim 1 or 2, **characterised in that** the second roller (9) of each pair is not divided axially.

4. Conditioning arrangement according to claim 3, **characterised in that** the first roller (8; 10) of at least one of the pairs (8, 9; 10, 9) travels through the conditioning gap (18; 19) defined by the pair in the opposite direction from the direction of feed of the harvested crop and the second roller (10; 25, 26) travels through the conditioning gap (18; 19) in the direction of feed of the harvested crop.

5. Conditioning arrangement according to one of the preceding claims, **characterised in that** a same second roller (9) belongs to a plurality of pairs (8, 9; 10, 9) of rollers.

6. Conditioning arrangement according to one of the preceding claims, **characterised in that** the number of sections (22, 23) on each first roller (8; 19) is at least three.

7. Conditioning arrangement according to one of the preceding claims, **characterised in that** the sections (23) of high effectiveness are larger in diameter than the sections (22) of low effectiveness, and **in that** two first rollers (8, 10) together form a gap (27) in which a section (23) of high effectiveness on one of the first rollers engages between two sections (23) of high effectiveness on the other first roller.

8. Conditioning arrangement according to one of claims 1 to 5, **characterised in that** the sections (23) of high effectiveness of two conditioning gaps (18, 19) at least partly overlap.

9. Conditioning arrangement according to claim 8, **characterised in that** the sections of high effectiveness on at least one of the first rollers are wider than the sections of low effectiveness.

10. Conditioning arrangement according to one of the preceding claims, **characterised in that** the first rollers (8, 10) of two conditioning gaps (18, 19) are of the same design and are arranged as mirror images of one another.

## Revendications

1. Dispositif de conditionnement pour une ensileuse, ayant une pluralité d'espaces de conditionnement (18, 19) qui sont chacun définis par une paire de rouleaux (8, 9; 10, 9) et qui sont disposés les uns après les autres sur une voie d'acheminement pour une récolte moissonnée, **caractérisé en ce qu'**au moins un premier rouleau (8; 9) d'au moins une paire est divisé dans le sens axial en sections (23, 22) de haute et basse efficacité de conditionnement.

2. Dispositif de conditionnement selon la revendication 1, **caractérisé en ce qu'**au moins un premier rouleau (10; 8) d'au moins une deuxième paire (10, 9; 8, 9) est également divisé dans le sens axial en sections (23, 22) de haute et basse efficacité de conditionnement, et **en ce que** les sections (22, 23) ayant la même efficacité de conditionnement des premières et deuxièmes paires (8, 9; 10, 9) sont décalées les unes par rapport aux autres axialement.

3. Dispositif de conditionnement selon la revendication 1 ou 2, **caractérisé en ce que** le deuxième rouleau (9) de chaque paire n'est pas divisé axialement.

4. Dispositif de conditionnement selon la revendication 3, **caractérisé en ce que** le premier rouleau (8; 10) d'au moins une des paires (8, 9; 10, 9) se déplace à travers l'espace de conditionnement (18; 19) défini par la paire dans le sens opposé au sens d'acheminement de la récolte moissonnée et le deuxième rouleau (10; 25, 26) se déplace à travers l'espace de conditionnement (18; 19) dans le sens d'acheminement de la récolte moissonnée.

5. Dispositif de conditionnement selon l'une des revendications précédentes, **caractérisé en ce que** un même deuxième rouleau (9) appartient à une pluralité de paires (8, 9; 10, 9) de rouleaux.

6. Dispositif de conditionnement selon l'une des revendications précédentes, **caractérisé en ce que** le nombre de sections (22, 23) sur chaque premier rouleau (8; 19) est au moins trois.

7. Dispositif de conditionnement selon l'une des revendications précédentes, **caractérisé en ce que** les sections (23) de haute efficacité ont un diamètre plus grand que les sections (22) de basse efficacité, et **en ce que** deux premiers rouleaux (8, 10) ensemble forment un espace (27) dans lequel une section (23) de haute efficacité sur un des premiers rouleaux s'engage entre deux sections (23) de haute efficacité sur l'autre premier rouleau.

8. Dispositif de conditionnement selon l'une des revendications 1 à 5, **caractérisé en ce que** les sections (23) de haute efficacité de deux espaces de conditionnement (18, 19) se chevauchent au moins partiellement.

9. Dispositif de conditionnement selon la revendication 8, **caractérisé en ce que** les sections de haute efficacité sur au moins un des premiers rouleaux sont plus larges que les sections de basse efficacité.

10. Dispositif de conditionnement selon l'une des revendications précédentes, **caractérisé en ce que** les premiers rouleaux (8, 10) de deux espaces de conditionnement (18, 19) sont de la même conception et sont disposés en images en miroir l'un de l'autre.
